# EUROPEAN PATENT SPECIFICATION

(11) **EP 4 645 538 B1**
(45) Date of publication and mention of the grant of the patent: **21.10.2026**
(21) Application number: 23925918.7
(22) Date of filing: 14.07.2023
(51) Int. Cl.: H01M 50/15, H01M 50/166, H01M 50/593, H01M 50/586, H01M 50/528, H01M 50/474, H01M 50/516, H01M 50/176, H01M 50/645, H01M 50/184, H01M 50/536, H01M 10/058, H01M 10/052

(54) **POSITIVE ELECTRODE COVER, BATTERY CELL AND ASSEMBLY METHOD**
POSITIVE ELEKTRODENABDECKUNG, BATTERIEZELLE UND MONTAGEVERFAHREN
COUVERCLE D'ÉLECTRODE POSITIVE, ÉLÉMENT DE BATTERIE ET PROCÉDÉ D'ASSEMBLAGE

(30) Priority: 07.03.2023 CN 202310208602
(43) Date of publication of application: 05.11.2025
(73) Proprietor: Phylion Battery Co., Ltd., Suzhou, Jiangsu 215153 (CN)
(72) Inventor: DING, Kun, Suzhou, Jiangsu 215153 (CN); WANG, Zhengwei, Suzhou, Jiangsu 215153 (CN); ZHANG, Chao, Suzhou, Jiangsu 215153 (CN); ZHU, Huajun, Suzhou, Jiangsu 215153 (CN); CHEN, Mengting, Suzhou, Jiangsu 215153 (CN)
(74) Representative: Chung, Hoi Kan
(86) International application number: PCT/CN2023/107471
(87) International publication number: WO 2024/183213

(56) References cited:
- WO-A1-2021/228165
- WO-A1-2022/067693
- WO-A1-2023/006050
- CN-A- 115 275 466
- CN-A- 116 073 043
- CN-U- 208 521 975
- CN-U- 213 816 269
- CN-U- 216 488 280

## Description

### FIELD OF THE INVENTION

The present invention relates to the field of battery cell processing technologies, and in particular to a battery cell and an assembly method.

### DESCRIPTION OF THE RELATED ART

Lithium batteries are a novel type of green and environmentally friendly energy storage component, offering advantages such as environmental friendliness, high energy density, and long service life. The lithium batteries are widely applied to fields such as automobile energy storage technologies, distributed power stations, telecommunication base station energy storage, household appliances, and electric tools.

During the assembly of a single battery cell of the lithium battery, an electrode assembly is typically first welded and fixed with an anode cover plate assembly. The electrode assembly is then inserted into a housing, and then the electrode assembly is welded and fixed with a cathode cover plate assembly. However, after the electrode assembly is inserted into the housing, the extractable length of the electrode assembly is limited due to the constraints imposed by the anode cover plate. To ensure the connection between the electrode assembly and the cathode cover plate assembly, a cathode tab of the electrode assembly is usually designed to be long. However, since the tab is long, when the cathode cover plate assembly is welded to the housing, the tab is likely to be pinched between the cover plate and the housing, resulting in poor connection or even short circuits. This not only affects the performance of the battery, but also increases manufacturing costs of the battery.

CN 115275466 A , which is deemed to be the closest prior art, discloses a battery cell having a detachable insulating support mounted on a cover plate.

Therefore, how to reduce the length of the tab while ensuring the welding reliability of the tab and the cathode cover plate assembly has become a critical challenge to be solved in the industry.

### SUMMARY OF THE INVENTION

Therefore, a technical problem to be solved by the present invention is to overcome the defect in the prior art that the tab is likely to be pinched between the cover plate and the housing due to the excessively long tab, and to provide a battery cell and an assembly method, so as to reduce the length of the tab without affecting the welding reliability of the tab and the cover plate.

In order to solve the above technical problem, the present invention provides a battery cell according to claim 1 and a method of assembling such a cell according to claim 9. Dependent claim define further advantageous embodiments.

### BRIEF DESCRIPTION OF THE DRAWINGS

In order to facilitate a clear understanding of contents of the present invention, the present invention will be further illustrated in detail below according to specific embodiments of the present invention in conjunction with the drawings. In the drawings:
FIG. 1 is an exploded view of a cathode cover plate according to the present invention;
FIG. 2 is a schematic diagram of operation of a cathode cover plate according to the present invention;
FIG. 3 is a side view of a cathode cover plate according to the present invention;
FIG. 4 is a schematic diagram of a cathode support according to the present invention;
FIG. 5 is a schematic structural diagram of a cover plate sheet according to the present invention;
FIG. 6 is a schematic diagram of a sealing rubber plug according to the present invention;
FIG. 7 is a schematic structural diagram of a battery cell according to the present invention;
FIG. 8 is a sectional view of a battery cell according to the present invention during assembly; and
FIG. 9 is a sectional view of a battery cell according to the present invention after the assembly is completed.

Reference Numerals: 10, cathode cover plate; 11, cover plate sheet; 11a, first surface; 11b, second surface; 111, undercut blind hole; 112, hole; 113, sealing rubber plug; 114, sealing section; 115, venting section; 116, venting groove; 117, hole; 118, sealing aluminum plug; 12, cathode support; 12a, third surface; 12b, fourth surface; 123, clamping slot; 124, undercut post; 125, reinforcement plate;
20, electrode assembly;
30, housing.

### DETAILED DESCRIPTION OF THE PREFERRED EMBODIMENTS

The present invention will be further described below with reference to the drawings and specific embodiments, such that those skilled in the art can better understand and implement the present invention.

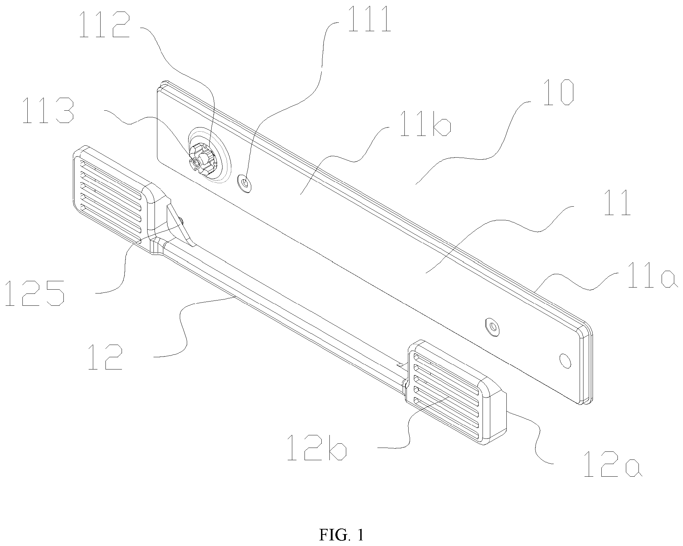

Referring to FIG. 1, a cathode cover plate is provided. In this embodiment, the cathode cover plate 10 includes:
a cover plate sheet 11, where the cover plate sheet 11 is provided with a first surface 11a and a second surface 11b that are opposite to each other. In this embodiment, the cover plate sheet 11 serving as the cathode is a glossy aluminum plate. The second surface 11b of the cover plate sheet 11 is directly and fixedly connected to a tab to lead out the electricity generated by an electrode assembly 20. The first surface 11a of the cover plate sheet 11 is used for connecting to an external circuit.

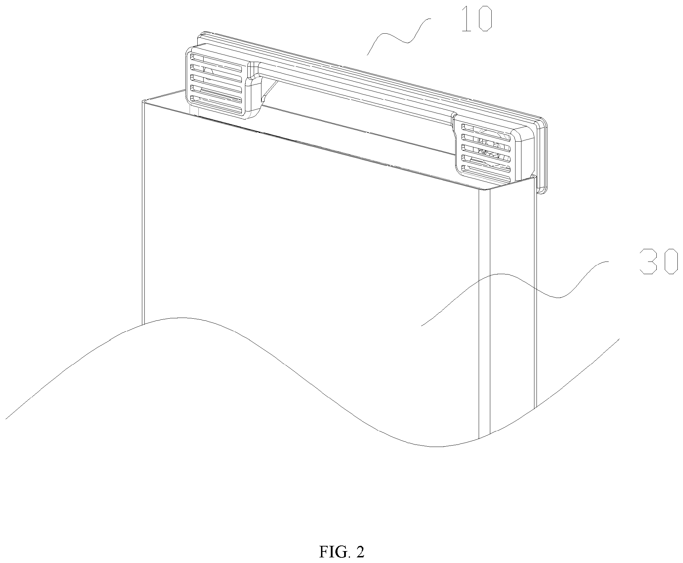

The cathode cover plate further includes a cathode support 12, where the cathode support 12 is used for limiting a position of the electrode assembly 20, and providing insulation between the electrode assembly 20 and the cover plate sheet 11. The cathode support 12 is detachably connected to the cover plate sheet 11, so as to facilitate the assembly. The cathode support 12 is provided with a third surface 12a and a fourth surface 12b that are opposite to each other, and the third surface 12a is attached to the second surface 11b of the cover plate sheet 11. Since the second surface 11b is directly connected to the tab, a clearance groove for accommodating the tab runs through a side of the cathode support 12, creating a space for accommodating the tab. The tab is connected to the second surface 11b at a position of the clearance groove. Further, a step is formed on the third surface 12a at a side corresponding to the clearance groove, and a clamping slot 123 is formed between the step and the second surface 11b, such that the cathode cover plate 10 can be snapped on a housing 30 by the clamping slot 123. Referring to FIG. 2, when the cathode cover plate 10 is snapped on a side of the housing 30, the housing 30 supports the cathode cover plate 10, thereby facilitating the fixation of the cathode cover plate 10 for welding and fixing the tab with the cover plate sheet 11. Moreover, since the cathode cover plate 10 is partially inserted into the housing 30, the distance between a lead-out terminal of the tab and a welding part on the cover plate sheet 11 is reduced, thereby achieving the welding with the cover plate sheet 11 without the need for a long tab. Compared with a conventional structure, the length of the tab is reduced by 2-6 mm, and such a reduction of the length of the tab improves the safety performance of the battery cell. In the process of turning over the cathode cover plate 10, the tab is pulled toward a side of the housing 30 opposite to the side where the cathode cover plate 10 is snapped, ensuring that the tab is not pinched between the cover plate sheet 11 and the housing 30. Meanwhile, the reduced length of the tab reduces material usage for the tab, and reduces production costs to some extent.

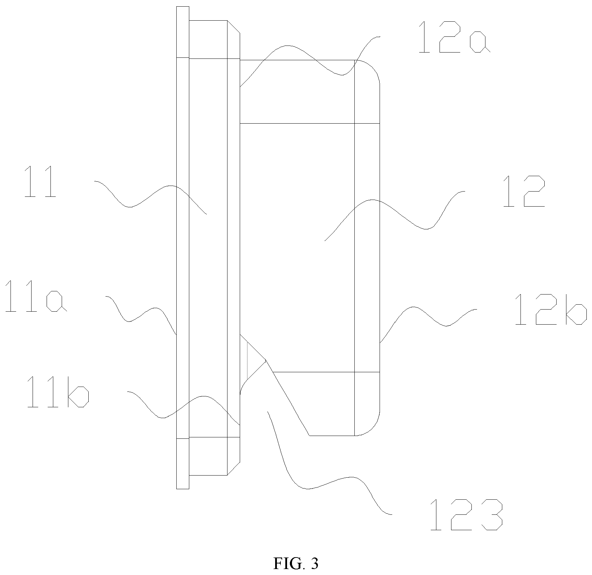

Further, the step provided on the third surface 12a may be a conventional step, and in this case, the cross section of the clamping slot 123 is rectangular. However, in this case, the width of the clamping slot 123 needs to be configured to be large to prevent jamming between the cathode cover plate 10 and the housing 30 in the process of turning over the cathode cover plate. Alternatively, as shown in FIG. 3, a step surface of the step may be configured as an inclined surface to form a V-shaped clamping slot 123. The V-shaped clamping slot 123 has the following advantages. First, the clamping slot 123 has a large opening, facilitating snapping the cathode cover plate 10 onto the housing 30. Second, when the housing 30 has been completely inserted into the clamping slot 123, the width of the clamping slot 123 only needs to accommodate the thickness of the housing 30. When the cathode cover plate 10 is turned over, to enable direct turning of the cathode cover plate 10 without removal from the housing 30, the clamping slot 123 must also accommodate the height of the inserted part of the housing 30. Due to a small width of a top part, the V-shaped clamping slot 123 can hold the housing 30, thereby fixing the position of the cathode cover plate 10 and facilitating the welding of the tab. Meanwhile, a large width of a lower part of the clamping slot 123 prevents interference with the housing 30 during turning of the cathode cover plate 10, allowing direct turning of the cathode cover plate 10 without requiring re-positioning of the cathode cover plate 10 and the housing 30.

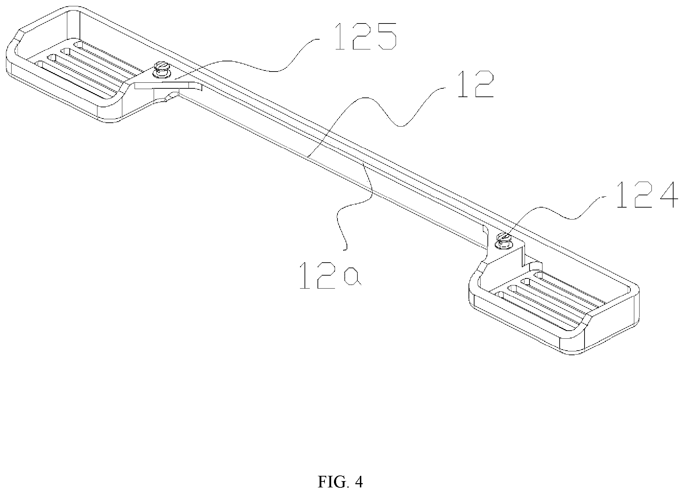

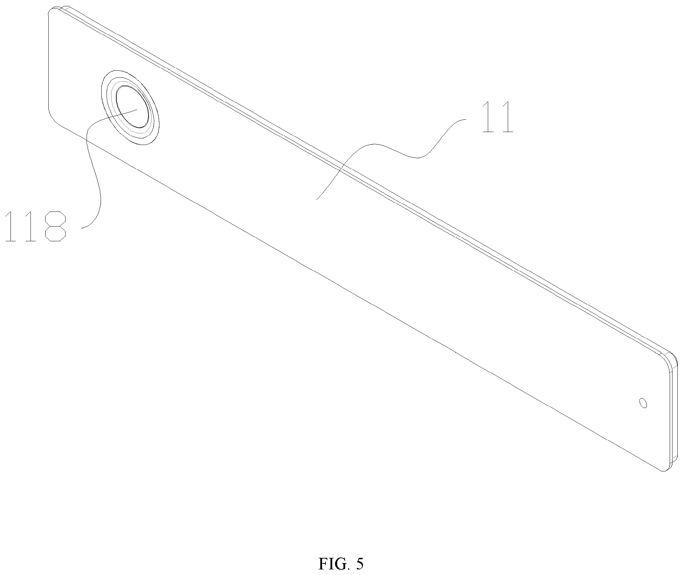

In order to fix the cathode support 12 with the cover plate sheet 11, the cathode support 12 and the cover plate sheet 11 may be assembled and fixed by ultrasonic welding. However, this fixing method is inconvenient to operate and costly. Therefore, in the present invention, as shown in FIGs. 4 and 5, an undercut blind hole 111 is provided on the second surface 11b, and the third surface 12a is provided with an undercut post 124 corresponding in position to the undercut blind hole 111. The undercut post 124 may be integrally injection-molded with the cathode support 12 to facilitate manufacture. When the cathode cover plate 10 is assembled, the undercut post 124 is directly snapped into the undercut blind hole 111, which is convenient to operate and eliminates the need for additional ultrasonic welding equipment, thereby greatly reducing the production costs. Further, since the surface area of the cathode support 12 is large and the clearance groove occupies a middle part on the cathode support 12, in order to reduce the number of the undercut posts 124 and ensure the stability of connection between the cathode support 12 and the cover plate sheet 11, a reinforcement plate 125 is provided at an interior corner of the clearance groove in this embodiment, and the undercut post 124 is arranged on the reinforcement plate 125. The reinforcement plate 125 provided at the interior corner of the clearance groove can enhance the strength of the cathode support 12 and avoid deformation of the cathode support 12. In addition, the reinforcement plate 125 is a flat plate with a size much larger than the diameter of the undercut post 124, and by positioning the undercut post 124 in a middle part of the reinforcement plate 125, the connection of the undercut post 124 becomes more stable.

Referring to FIG. 4, a hole 112 is provided on the cover plate sheet 11, and the hole 112 is sealed by a sealing rubber plug 113. In this way, sealing is achieved after liquid injection into the battery cell. During continuous charging and discharging processes, the electrode assembly 20 generates a large amount of gas, which increases the internal pressure of the battery cell that could potentially eject the sealing rubber plug 113. To prevent this, a sealing aluminum plug 118 is further hermetically welded outside the hole 112. The connection strength between the sealing aluminum plug 118 and the cover plate sheet 11 is large. Even if the internal pressure of the battery cell attempts to push out the sealing rubber plug 113, the sealing rubber plug 113 will not be detached due to the blocking of the sealing aluminum plug 118, thereby ensuring the sealing of the battery cell.

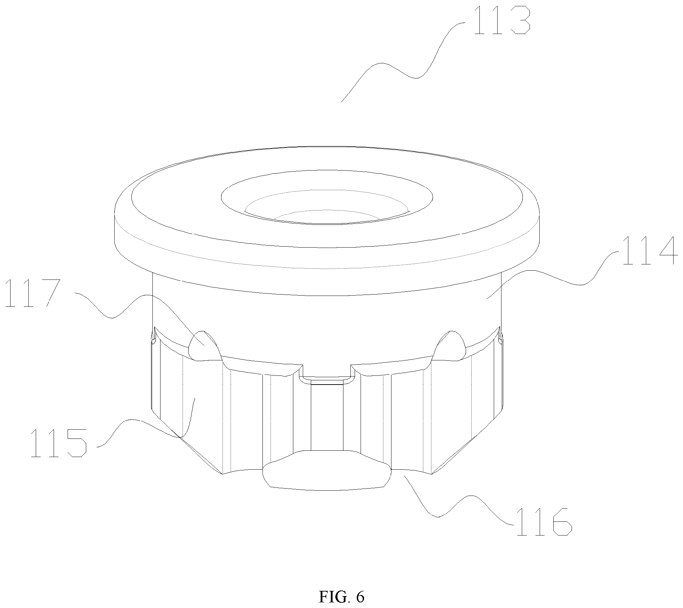

In view of the large amount of gas generated by the electrode assembly 20 during continuous charging and discharging processes which causes excessive internal pressure of the battery cell, in the present invention, the interior of the battery cell is vacuumized during insertion of the sealing rubber plug 113 into the hole 112, creating negative pressure in the battery cell. In this way, even if gas is generated by the battery cell during charging and discharging processes, the battery cell does not swell due to the negative pressure. Specifically, referring to FIG. 6, the sealing rubber plug 113 includes a sealing section 114 and a venting section 115, a size of the sealing section 114 matches that of the hole 112, the venting section 115 axially extends along the sealing section 114, and a plurality of venting grooves 116 are axially opened on a side edge of the venting section 115. When the venting section 115 is not completely inserted into the hole 112, the internal and external spaces of the battery cell are in communication with each other by the venting grooves 116, the interior of the battery cell can be vacuumized through the venting grooves 116, creating negative internal pressure of the battery cell. Further, the sealing section 114 is provided with holes 117 in communication with the venting grooves 116. Therefore, even if excessive force is applied, which causes the venting section 115 to be completely inserted into the hole 112, the holes 117 in communication with the venting grooves 116 maintain communication between the internal and external spaces of the battery cell, ensuring the battery cell to be vacuumized. Meanwhile, a small amount of easily detectable gas, such as helium, can be introduced into the battery cell through the holes 117 in communication with the venting grooves 116, facilitating check of gas leakage of the battery.

Due to the presence of the clamping slot 123, the cathode cover plate 10 can be snapped on a side of the housing 30, so as to reduce the distance between the lead-out terminal of the tab and a welding position on the cover plate sheet 11, thereby reducing the length of the tab, and improving the safety of the battery cell. Meanwhile, after the cathode cover plate 10 is snapped onto the housing 30, the position of the cathode cover plate is fixed, facilitating the welding of the cathode cover plate with the tab. In addition, the cathode cover plate 10 can be snap-fitted by direct turning, which is convenient to operate. The arrangement of the sealing rubber plug 113 allows the interior of the battery cell to be vacuumized without affecting the sealing effect of the battery cell, thereby further improving the safety of the battery cell.

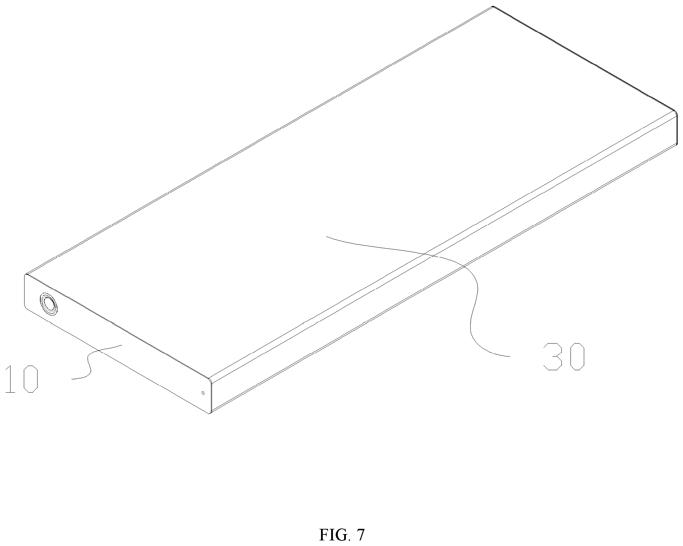

Referring to FIG. 7, a battery cell is provided. The battery cell includes the cathode cover plate 10 as described above, the electrode assembly 20, and the housing 30. The width of the clamping slot 123 is greater than the thickness of the housing 30. Thus, the cathode cover plate 10 can be snapped on a side of the housing 30. In this case, the position of the cathode cover plate 10 is fixed, such that the tab can be welded and fixed without requiring additional clamping devices to clamp and fix the cathode cover plate 10 for connection to the tab. Moreover, since one side of the cathode cover plate 10 is inserted into the housing 30 while the other side is lifted, a welding space is created. Therefore, the distance between the lead-out terminal of the tab and the welding position on the cover plate sheet 11 is reduced, such that the length of the tab can be reduced, and the connection can be facilitated. The reduced length of the tab improves the safety of the battery cell and reduces the material cost of the tab.

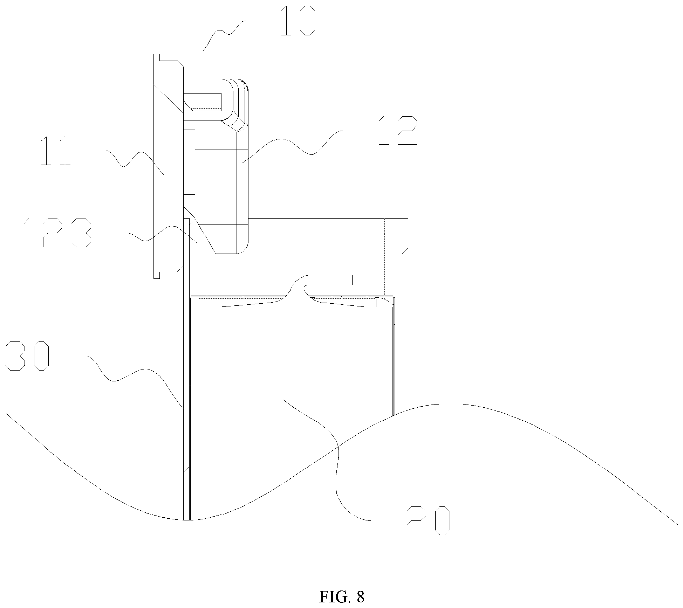

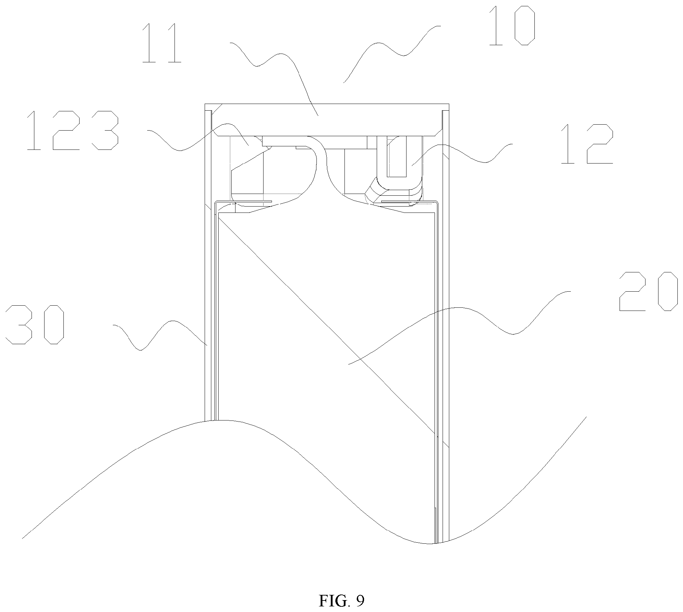

Referring to FIGs. 8 and 9, the present invention further provides a battery cell assembly method using the cathode cover plate 10 as described above. The battery cell assembly method includes the following steps.

In S1, the cathode support 12 is snap-fitted and fixed with the cover plate sheet 11, and the electrode assembly 20 with the tab is inserted into the housing 30.

In S2, a side of an end portion of the housing 30 is inserted to the clamping slot 123. In this case, a part of cathode cover plate 10 at one side is inserted into the housing 30, such that the position of the cathode cover plate 10 is fixed, and the distance between the lead-out terminal of the tab and the welding position of the cover plate sheet 11 is reduced, thereby reducing the length of the tab. Since the other side of the cathode cover plate 10 is lifted, an operation space is created, facilitating the welding and fixation of the tab with the cover plate sheet 11.

In S3, the tab at an end part of the electrode assembly 20 is fixedly connected to the second surface 11b of the cover plate sheet 11. In this embodiment, the fixation is implemented by welding, such that the tab is led out.

In S4, the cathode cover plate 10 is turned over, such that the cathode cover plate is snap-fitted at the end portion of the housing 30. The cathode cover plate 10 can be turned over directly without removing the cathode cover plate 10 from its snap-fit position with the housing 30. Therefore, in the process of turning over the cathode cover plate 10, the distance between the lead-out terminal of the tab and the welding position on the cover plate sheet 11 is not increased, thereby ensuring the stability of connection between the tab and the cover plate sheet 11.

In S5, the cathode cover plate 10 is fixedly connected to the housing 30. In order to ensure the sealing performance of the connection, the fixation is implemented by welding in this embodiment.

Before the cathode cover plate 10 is snapped onto the housing 30, the cathode support 12 is first assembled with the cover plate sheet 11 to form the cathode cover plate 10. The undercut post 124 of the cathode support 12 is directly inserted into the undercut blind hole 111 on the cover plate sheet 11, and the two are snap-fitted to form the cathode cover plate 10. After the cathode cover plate 10 is fixedly connected to the housing 30, electrolyte is injected into the housing 30 through the hole 112, and then the sealing rubber plug 113 is inserted. During the insertion of the sealing rubber plug 113, the interior of the battery cell is vacuumized by utilizing the venting grooves 116 or the holes 117 in communication with the venting grooves 116, creating negative pressure in the battery cell. Then, a gas for detection is injected into the battery cell to facilitate the gas tightness detection. The insertion of the sealing rubber plug 113 continues until the sealing rubber plug 113 completely seals the hole 112. Then, the sealing aluminum plug 118 is welded and fixed outside the hole 112 to prevent the sealing rubber plug 113 from being detached.

It is obvious that the above embodiments are merely examples for clear illustration. Various changes and modifications can be made by those of ordinary skill in the art on the basis of the above The scope of protection of the present invention is defined by the appended claims.

## Claims

1. A battery cell, comprising a cathode cover plate (10), the cathode cover plate (10), comprising:
- a cover plate sheet (11), wherein the cover plate sheet (11) is provided with a first surface (11a) and a second surface (11b) that are opposite to each other; and
- a cathode support (12), wherein the cathode support (12) is detachably connected to the cover plate sheet (11), the cathode support (12) is provided with:
- a third surface (12a) and
- a fourth surface (12b) that are opposite to each other, the third surface (12a) being attached to the second surface (11b) of the cover plate sheet (11),
- a clearance groove for accommodating a tab extending through a side of the cathode support (12),
- a step, formed on the third surface (12a) at a side corresponding to the clearance groove, and
- a clamping slot (123), formed between the step and the second surface (11b),
- an electrode assembly (20) having a tab at an end part thereof and
- a housing (30),
wherein a width of the clamping slot (123) is greater than a thickness of the housing (30), wherein
the clamping slot (123) is such that the cathode cover plate (10) can be snapped on a housing (30) by the clamping slot (123) so that the housing (30) can support the cathode cover plate (10), wherein
the tab is fixedly connected to the second surface (11b) of the cover plate sheet (11).

2. The battery cell according to claim 1, wherein a step surface of the step is an inclined surface, and the clamping slot (123) is a V-shaped slot.

3. The battery cell according to claim 1, wherein an undercut blind hole (111) is provided on the second surface (11b), and the third surface (12a) is provided with an undercut post (124) corresponding in position to the undercut blind hole (111).

4. The battery cell according to claim 3, wherein a reinforcement plate (125) is provided at an interior corner of the clearance groove, and the undercut post (124) is arranged on the reinforcement plate (125).

5. The battery cell according to claim 1, wherein a liquid injection hole (112) is provided on the cover plate sheet (11), and the liquid injection hole (112) is sealed by a sealing rubber plug (113).

6. The battery cell according to claim 5, wherein the sealing rubber plug (113) comprises a sealing section (114) and a venting section (115), a size of the sealing section (114) matches that of the liquid injection hole (112), the venting section (115) axially extends along the sealing section (114), and a plurality of venting grooves (116) are opened axially on a side edge of the venting section (115).

7. The battery cell according to claim 6, wherein a venting hole (117) in communication with the venting groove (116) is provided on the sealing section (114).

8. The battery cell according to claim 5, wherein a sealing aluminum plug (118) is hermetically welded to the liquid injection hole (112).

9. A method of assembly for a battery cell according to any one of claims 1-8, the method comprising steps of:
S1: fixing the cathode support (12) with the cover plate sheet (11) by snap-in connection, and inserting the electrode assembly (20) into the housing (30);
S2: inserting a side of an end portion of the housing (30) into the clamping slot (123) so that the cathode cover plate (10) is snapped on a housing (30) by the clamping slot (123) so that the housing (30) can support the cathode cover plate (10);
S3: fixedly connecting a tab at an end part of the electrode assembly (20) to the second surface (11b) of the cover plate sheet (11);
S4: turning over the cathode cover plate (10), such that the cathode cover plate (10) is snap-fitted at the end portion of the housing (30); and
S5: fixedly connecting the cathode cover plate (10) to the housing (30).

## Patentansprüche

1. Batteriezelle, umfassend eine Kathodenabdeckplatte (10), wobei die Kathodenabdeckplatte (10) Folgendes umfasst:
- ein Abdeckplattenblech (11), wobei das Abdeckplattenblech (11) mit einer ersten Oberfläche (11a) und einer zweiten Oberfläche (11b) versehen ist, die einander gegenüberliegen; und
- einen Kathodenträger (12), wobei der Kathodenträger (12) lösbar mit dem Abdeckplattenblech (11) verbunden ist, wobei der Kathodenträger (12) mit Folgendem versehen ist:
- einer dritten Oberfläche (12a) und
- einer vierten Oberfläche (12b), die einander gegenüberliegen, wobei die dritte Oberfläche (12a) an der zweiten Oberfläche (11b) des Abdeckplattenblechs (11) anliegt,
- einer durch eine Seite des Kathodenträgers (12) verlaufenden Aussparungsnut zur Aufnahme einer Kontaktfahne,
- einer Stufe, die auf der dritten Oberfläche (12a) an einer der Aussparungsnut entsprechenden Seite ausgebildet ist, und
- einem Klemmschlitz (123), der zwischen der Stufe und der zweiten Oberfläche (11b) ausgebildet ist,
- eine Elektrodenbaugruppe (20) mit einer Kontaktfahne an einem Endabschnitt derselben und
- ein Gehäuse (30),
wobei eine Breite des Klemmschlitzes (123) größer als eine Dicke des Gehäuses (30) ist, wobei der Klemmschlitz (123) derart ausgebildet ist, dass die Kathodenabdeckplatte (10) durch den Klemmschlitz (123) auf ein Gehäuse (30) aufgeschnappt werden kann, sodass das Gehäuse (30) die Kathodenabdeckplatte (10) abstützen kann, wobei
die Kontaktfahne fest mit der zweiten Oberfläche (11b) des Abdeckplattenblechs (11) verbunden ist.

2. Batteriezelle nach Anspruch 1, wobei eine Stufenfläche der Stufe eine geneigte Fläche ist und der Klemmschlitz (123) ein V-förmiger Schlitz ist.

3. Batteriezelle nach Anspruch 1, wobei ein hinterschnittenes Sackloch (111) in der zweiten Oberfläche (11b) vorgesehen ist, und die dritte Oberfläche (12a) mit einem hinterschnittenen Zapfen (124) versehen ist, der in seiner Position dem hinterschnittenen Sackloch (111) entspricht.

4. Batteriezelle nach Anspruch 3, wobei eine Verstärkungsplatte (125) an einer inneren Ecke der Aussparungsnut vorgesehen ist, und der hinterschnittene Zapfen (124) auf der Verstärkungsplatte (125) angeordnet ist.

5. Batteriezelle nach Anspruch 1, wobei eine Elektrolyteinfüllöffnung (112) in dem Abdeckplattenblech (11) vorgesehen ist, und die Elektrolyteinfüllöffnung (112) durch einen Dichtungsgummistopfen (113) abgedichtet ist.

6. Batteriezelle nach Anspruch 5, wobei der Dichtungsgummistopfen (113) einen Dichtungsabschnitt (114) und einen Entlüftungsabschnitt (115) umfasst, eine Größe des Dichtungsabschnitts (114) mit der der Elektrolyteinfüllöffnung (112) übereinstimmt, der Entlüftungsabschnitt (115) sich axial entlang des Dichtungsabschnitts (114) erstreckt, und eine Vielzahl von Entlüftungsnuten (116) axial in einer Seitenkante des Entlüftungsabschnitts (115) eingebracht ist.

7. Batteriezelle nach Anspruch 6, wobei ein Entlüftungsloch (117), das mit der Entlüftungsnut (116) in Verbindung steht, am Dichtungsabschnitt (114) vorgesehen ist.

8. Batteriezelle nach Anspruch 5, wobei ein Dichtungsaluminiumstopfen (118) hermetisch an der Außenseite der Elektrolyteinfüllöffnung (112) verschweißt ist.

9. Montageverfahren für eine Batteriezelle nach einem der Ansprüche 1 bis 8, wobei das Verfahren die folgenden Schritte umfasst:
S1: Fixieren des Kathodenträgers (12) an dem Abdeckplattenblech (11) durch Schnappverbindung, und Einführen der Elektrodenbaugruppe (20) in das Gehäuse (30);
S2: Einführen einer Seite eines Endabschnitts des Gehäuses (30) in den Klemmschlitz (123), sodass die Kathodenabdeckplatte (10) durch den Klemmschlitz (123) auf ein Gehäuse (30) aufgeschnappt wird, sodass das Gehäuse (30) die Kathodenabdeckplatte (10) abstützen kann;
S3: Festes Verbinden einer Kontaktfahne an einem Endabschnitt der Elektrodenbaugruppe (20) mit der zweiten Oberfläche (11b) des Abdeckplattenblechs (11);
S4: Umklappen der Kathodenabdeckplatte (10), sodass die Kathodenabdeckplatte (10) an dem Endabschnitt des Gehäuses (30) aufgeschnappt wird; und
S5: Festes Verbinden der Kathodenabdeckplatte (10) mit dem Gehäuse (30).

## Revendications

1. Cellule de batterie, comprenant une plaque de couverture cathodique (10), la plaque de couverture cathodique (10) comprenant :
- une tôle de couverture (11), ladite tôle de couverture (11) étant pourvue d'une première surface (11a) et d'une seconde surface (11b) opposées l'une à l'autre ; et
- un support cathodique (12), ledit support cathodique (12) étant raccordé de manière amovible à la tôle de couverture (11), ledit support cathodique (12) étant pourvu :
- d'une troisième surface (12a) et
- d'une quatrième surface (12b) opposées l'une à l'autre, la troisième surface (12a) étant appliquée contre la seconde surface (11b) de la tôle de couverture (11),
- d'une rainure de dégagement destinée à recevoir une languette s'étendant à travers un côté du support cathodique (12),
- un épaulement, formé sur la troisième surface (12a) du côté correspondant à la rainure de dégagement, et
- une fente de serrage (123), formée entre l'épaulement et la seconde surface (11b),
- un ensemble électrode (20) comportant une languette à une extrémité de celui-ci, et
- un boîtier (30),
dans laquelle une largeur de la fente de serrage (123) est supérieure à l'épaisseur du boîtier (30), et dans laquelle
la fente de serrage (123) est configurée de telle sorte que la plaque de couverture cathodique (10) puisse être encliquetée sur un boîtier (30) par la fente de serrage (123) afin que le boîtier (30) puisse supporter la plaque de couverture cathodique (10), et dans laquelle
la languette est raccordée fixement à la seconde surface (11b) de la tôle de couverture (11).

2. Cellule de batterie selon la revendication 1, dans laquelle la surface de l'épaulement est une surface inclinée, et la fente de serrage (123) est une fente en V.

3. Cellule de batterie selon la revendication 1, dans laquelle un trou borgne à contre-dépouille (111) est ménagé sur la seconde surface (11b), et la troisième surface (12a) est pourvue d'un pion à contre-dépouille (124) dont la position correspond à celle du trou borgne à contre-dépouille (111).

4. Cellule de batterie selon la revendication 3, dans laquelle une plaque de renfort (125) est disposée à un angle intérieur de la rainure de dégagement, et le pion à contre-dépouille (124) est agencé sur la plaque de renfort (125).

5. Cellule de batterie selon la revendication 1, dans laquelle un trou d'injection de liquide (112) est ménagé sur la tôle de couverture (11), et le trou d'injection de liquide (112) est obturé par un bouchon d'étanchéité en élastomère (113).

6. Cellule de batterie selon la revendication 5, dans laquelle le bouchon d'étanchéité en élastomère (113) comprend une section d'étanchéité (114) et une section de purge (115), une dimension de la section d'étanchéité (114) correspond à celle du trou d'injection de liquide (112), la section de purge (115) s'étend axialement le long de la section d'étanchéité (114), et une pluralité de rainures de purge (116) sont ménagées axialement sur un bord latéral de la section de purge (115).

7. Cellule de batterie selon la revendication 6, dans laquelle un trou de purge (117) en communication avec la rainure de purge (116) est ménagé sur la section d'étanchéité (114).

8. Cellule de batterie selon la revendication 5, dans laquelle un bouchon d'obturation en aluminium (118) est soudé de manière étanche au trou d'injection de liquide (112).

9. Procédé d'assemblage pour une cellule de batterie selon l'une quelconque des revendications 1 à 8, le procédé comprenant les étapes suivantes :
Étape 1 : fixer le support cathodique (12) à la tôle de couverture (11) par liaison par encliquetage, et insérer l'ensemble électrode (20) dans le boîtier (30) ;
Étape 2 : insérer un côté d'une partie d'extrémité du boîtier (30) dans la fente de serrage (123) de sorte que la plaque de couverture cathodique (10) soit encliquetée sur un boîtier (30) par la fente de serrage (123) afin que le boîtier (30) puisse supporter la plaque de couverture cathodique (10) ;
Étape 3 : raccorder fixement une languette à une extrémité de l'ensemble électrode (20) à la seconde surface (11b) de la tôle de couverture (11) ;
Étape 4 : retourner la plaque de couverture cathodique (10), de telle sorte que la plaque de couverture cathodique (10) soit ajustée par encliquetage à la partie d'extrémité du boîtier (30) ; et
Étape 5 : raccorder fixement la plaque de couverture cathodique (10) au boîtier (30).
